# EUROPÄISCHE PATENTSCHRIFT

(11) **EP 1 702 820 B1**
(45) Veröffentlichungstag und Bekanntmachung des Hinweises auf die Patenterteilung: **05.08.2009**
(21) Anmeldenummer: 06005026.7
(22) Anmeldetag: 11.03.2006
(51) Int. Cl.: B60T 1/087, B60T 10/02

(54) **Kühlkreislauf mit einer hydrodynamischen Bremse**
Cooling circuit with a retarder
Circuit de refroidissement avec un frein ralentisseur hydraulique.

(30) Priorität: 18.03.2005 DE 102005013075
(43) Veröffentlichungstag der Anmeldung: 20.09.2006
(73) Patentinhaber: Voith Turbo GmbH & Co. KG, 89522 Heidenheim (DE)
(72) Erfinder: Adams, Werner, 74564 Crailsheim (DE); Heilinger, Peter, 74589 Satteldorf (DE); Höller, Heinz, 74564 Crailsheim (DE); Laukemann, Dieter, 74541 Vellberg (DE)
(74) Vertreter: Weitzel, Wolfgang

(56) Entgegenhaltungen:
- WO-A-95/01500
- DE-A1- 19 637 316
- US-A1- 2002 148 691
- US-B1- 6 546 899

## Beschreibung

Die Erfindung betrifft einen Kühlkreislauf, insbesondere einen Fahrzeugkühlkreislauf, zur Kühlung eines Motors, insbesondere Verbrennungsmotors, bei welchem eine hydrodynamische Bremse in dem Kühlkreislauf angeordnet ist, und das Kühlmedium insbesondere zugleich das Arbeitsmedium der hydrodynamischen Bremse ist.

Solche Kühlkreisläufe sind in einer Vielzahl von Ausführungen bekannt. Beispielsweise wird auf die Offenlegungsschrift DE 196 37 316 A1 verwiesen.

Weitere entsprechende Kühlkreisläufe zeigen die Dokumente WO 95/01500 A, US 2002/148691 A1 und US 6 546 899 B1.

Gemäß des Standes der Technik wird dadurch zwischen einem Bremsbetrieb und einem Nichtbremsbetrieb hin- und hergeschaltet, dass die hydrodynamische Bremse einmal (im Bremsbetrieb) mit dem Kühlmedium durchströmt wird, während im anderen Fall (Nichtbremsbetrieb) das Kühlmedium durch einen Bypass an der hydrodynamischen Bremse vorbei geleitet wird. Hierzu ist ein Umschaltventil vorgesehen, in der Regel ein 3/2-Ventil, mittels welchem der "ankommende" Kühlmediumstrom entweder durch den Bypass oder durch die hydrodynamische Bremse geleitet wird. Gleichfalls sind Ausführungsformen bekannt, bei denen eine weitgehend beliebige Aufteilung des Kühlmediumstromes auf den Kühlkreislaufzweig mit der hydrodynamischen Bremse und den Bypass erfolgen kann, umfassend die beiden Extremzustände, dass das Kühlmedium ausschließlich durch den Bypass oder ausschließlich durch die hydrodynamische Bremse geleitet wird.

Die Erfindung betrifft aber auch solche Kühlkreisläufe, bei denen das Kühlmedium des Kühlkreislaufs nicht unmittelbar durch die hydrodynamische Bremse geleitet wird, sondern in den Kühlkreislauf ein Wärmetauscher geschaltet ist, mittels welchem ein in einem getrennten Kreislauf angeordnetes Arbeitsmedium der hydrodynamischen Bremse gekühlt wird. Insbesondere ist die hydrodynamische Bremse in einem solchen Fall als Ölretarder ausgeführt, dessen Arbeitsmedium ein Hydrauliköl ist, und die Wärme des durch den Ölretarder erwärmten Hydrauliköls wird über einen Öl-Wasser-Wärmetauscher, welcher mit seiner Wasserseite im Kühlkreislauf, insbesondere Fahrzeugkühlkreislauf, angeordnet ist, auf den Kühlkreislauf abgeführt.

Allen gattungsgemäßen Kühlkreisläufen gemäß des Standes der Technik ist gemeint, dass sowohl der Bypass als auch die hydrodynamische Bremse beziehungsweise der Wärmetauscher zur Kühlung des Arbeitsmediums der hydrodynamischen Bremse in einer Reinschaltung zu dem durch das Kühlmedium zu kühlenden Motor im Kühlkreislauf angeordnet sind, entweder in Strömungsrichtung vor dem Motor oder in Strömungsrichtung hinter dem Motor.

In der Regel wird in einem solchen Kühlkreislauf eine Kühlmediumpumpe vorgesehen, welche dazu dient, das Kühlmedium in sämtlichen Schaltzuständen des Kühlkreislaufes in diesem umzupumpen, um einen Strömungskreislauf aufrechtzuerhalten, damit das Kühlmedium einerseits gewünschte Bauteile, wie den Verbrennungsmotor und die hydrodynamische Bremse, kühlen kann und andererseits in einem im Kühlkreislauf angeordneten Wärmetauscher die vom Kühlmedium aufgenommene Wärme wieder abgeleitet werden kann. Insbesondere bei einem Einsatz in einem Fahrzeug ist es wichtig, das Betriebsverhalten der Kühlmediumpumpe dahingehend zu optimieren, dass die Kühlmediumpumpe mit einem möglichst hohen Wirkungsgrad arbeitet, um den Kraftstoffverbrauch des Fahrzeugs zu senken.

Zudem soll die Verfügbarkeit der hydrodynamischen Bremse möglichst optimal ausgeführt werden.

Obwohl die bisherigen Lösungen erfolgreich arbeiten, gibt es Raum für Verbesserungen. Insbesondere soll die Verfügbarkeit der hydrodynamischen Bremse weiter erhöht werden und die Leistungsaufnahme der Pumpe im Hinblick auf die verschiedenen Betriebszustände Bremsbetrieb und Nichtbremsbetrieb verbessert werden.

Der Erfindung liegt somit die Aufgabe zugrunde, einen Kühlkreislauf mit einer Kühlmediumpumpe, die ein Kühlmedium in dem Kühlkreislauf umpumpt, einem Motor, der durch das Kühlmedium gekühlt wird und einer hydrodynamischen Bremse, deren Arbeitsmedium das Kühlmedium ist oder deren Arbeitsmedium durch das Kühlmedium gekühlt wird, derart weiterzuentwickeln, dass der Kühlkreislauf im Hinblick auf die genannten Merkmale, Retarderverfügbarkeit und Leistungsaufnahme der Pumpe, verbessert wird.

Die erfindungsgemäße Aufgabe wird durch einen Kühlkreislauf mit den Merkmalen der unabhängigen Ansprüche gelöst. Die abhängigen Ansprüche beschreiben vorteilhafte und besonders zweckmäßige Ausgestaltungen der Erfindung.

Erfindungsgemäß ist, abweichend von einem Grundprinzip der bisherigen Ausgestaltungen, die hydrodynamische Bremse beziehungsweise der Wärmetauscher zur unmittelbaren Abkühlung des Arbeitsmediums der hydrodynamischen Bremse im Kühlkreislauf - mit Bezug auf die Kühlmediumströmung durch den Motor und die hydrodynamische Bremse beziehungsweise den entsprechenden Wärmetauscher - parallel zu dem Motor angeordnet, und vor der hydrodynamischen Bremse beziehungsweise dem Wärmetauscher für die hydrodynamische Bremse ist ein Ventil, welches als Einschalt-Ventil oder als Einschalt-Regelventil ausgebildet ist, hinsichtlich der Strömungsführung (im Bremsbetrieb) ebenfalls parallel zu dem Motor angeordnet.

Hierdurch wird erreicht, dass im Nichtbremsbetrieb, in welchem das Ventil geschlossen ist, das Kühlmedium von der Kühlmediumpumpe nur durch den Verbrennungsmotor, welcher sozusagen den Bypass zu der hydrodynamischen Bremse darstellt, gepumpt wird, wohingegen im Bremsbetrieb der Kühlmediumstrom, insbesondere unmittelbar hinter der Kühlmediumpumpe, in zwei Teilströme aufgeteilt wird, dadurch dass das Ventil geöffnet wird, wobei einer dieser beiden Teilströme durch den Motor und der andere Teilstrom durch die hydrodynamische Bremse oder den Wärmetauscher zur unmittelbaren Abkühlung des Arbeitsmediums der hydrodynamischen Bremse geleitet wird.

Nachfolgend wir die Erfindung anhand ihrer ersten Ausführung, bei der das Kühlmedium zugleich das Arbeitsmedium der hydrodynamischen Bremse ist, beschrieben, wobei jedoch festgehalten werden soll, dass es alternativ möglich ist, einen separaten Arbeitsmediumkreislauf für die hydrodynamische Bremse vorzusehen, beispielsweise einen Ölkreislauf für einen Ölretarder, und das Kühlmedium des Kühlkreislaufes zum Kühlen dieses Arbeitsmediums heranzuziehen. Somit wird in einer solchen Ausführung anstelle der hydrodynamischen Bremse im Kühlkreislauf ein Wärmetauscher angeordnet sein.

Das Öffnen des Ventils, um Kühlmedium beim Übergang vom Nichtbremsbetrieb zum Bremsbetrieb in die hydrodynamische Bremse einzuleiten, und somit die "Aktivierung" des zweiten, parallelen Kühlmediumstromes relativ zu dem Kühlmediumstrom durch den Motor, hat zur Folge, dass der wirksame Strömungsquerschnitt im Kühlkreislauf im Bremsbetrieb gegenüber dem Nichtbremsbetrieb stark vergrößert wird, wodurch der Gesamtströmungswiderstand im Kühlkreislauf, welcher von der Kühlmediumpumpe zu überwinden ist, extrem reduziert wird. Insbesondere bei Zuschalten des zweiten, parallelen Strömungsquerschnittes durch Öffnen des Parallelzweiges mit der hydrodynamischen Bremse direkt hinter der Pumpe wird eine Steigerung der Pumpenfördermenge vorteilhaft erreicht. Somit wird der Motor auch bei Zuschalten der hydrodynamischen Bremse mit einem ausreichenden, in der Regel gegenüber dem Nichtbremsbetrieb nicht oder kaum reduzierten Kühlmediumstrom versorgt, und die hydrodynamische Bremse kann gleichzeitig den für ein hohes Bremsmoment erforderlichen Kühlmediumstrom in einer großen Strömungsmenge erhalten. In der Regel wird sich die hydrodynamische Bremse den erforderlichen Kühlmediumstrom aufgrund ihrer Saugwirkung selbsttätig ansaugen können und aufgrund ihrer Pumpwirkung in Richtung des Wärmetauschers pumpen können.

Insbesondere bei einer Regelung der Kühlmediumtemperatur auf eine konstante Motor-Auslasstemperatur, das heißt das Kühlmedium, welches aus dem Motor nach Abkühlen desselben austritt, soll möglichst eine konstante Temperatur aufweisen, kann durch die erfindungsgemäße Gestaltung des Kühlkreislaufes diese Temperaturregelung weitgehend unbeeinflusst von einer Temperaturüberlagerung durch den Kühlmediumstrom aus der hydrodynamischen Bremse bleiben.

Die Regelung der Kühlmediumtemperatur erfolgt vorteilhaft dadurch, dass zu dem Wärmetauscher, insbesondere des Fahrzeugkühlers, mittels welchem die Wärme aus dem Kühlmedium an die Umgebung abgeleitet wird, ein Bypass vorgesehen ist, und eine Aufteilung des abzukühlenden Kühlmediumstromes auf den Wärmetauscher und den Bypass erfolgt. Wenn eine starke Abkühlung des Kühlmediums erforderlich ist, wird bei dieser Aufteilung sämtliches Kühlmedium durch den Wärmetauscher geleitet, wohingegen, wenn keine Abkühlung erforderlich ist, das Kühlmedium vollständig am Wärmetauscher vorbei durch den Bypass geleitet wird. Beliebige Zwischenstufen einer Aufteilung des Kühlmediumstromes auf den Wärmetauscher und den Bypass sind denkbar.

Die Temperaturregelung kann über ein sogenanntes Thermostat-Regelventil erfolgèn, das heißt über ein Ventil in Strömungsrichtung vor dem Wärmetauscher und dem Bypass um den Wärmetauscher, welches in Abhängigkeit der von ihm erfassten Temperatur des einströmenden Kühlmediums den Kühlmediumstrom auf den Wärmetauscher und den Bypass aufteilt. Alternativ ist es möglich, im Motor oder in Strömungsrichtung des Kühlmediums hinter dem Motor ein Thermostat beziehungsweise einen Temperatursensor zur Erfassung der Temperatur des aus dem Motor austretenden Kühlmediums vorzusehen, und die Aufteilung dieses Kühlmediumstromes auf den Wärmetauscher und den Bypass über ein zusätzlich vorgesehenes Ventil, beispielsweise ein Umschaltventil hinter oder vor dem Wärmetauscher, vorzusehen. Die Erfassung der Temperatur kann auch indirekt erfolgen, beispielsweise über einen an anderer Stelle positionierten Temperatursensor oder durch Berechnung aus anderen erfassten Zustandsgrößen.

Gemäß einer vorteilhaften Ausführung der Erfindung wird im Bremsbetrieb das aus der hydrodynamischen Bremse stammende Kühlmedium stets vollständig durch den Wärmetauscher geleitet, das heißt der Kühlmediumstrom aus der hydrodynamischen Bremse wird nicht durch die beschriebene Steuervorrichtung zur Aufteilung des Kühlmediumstromes auf den Wärmetauscher und den Bypass beeinflusst beziehungsweise geregelt.

Gemäß einer alternativen Ausführungsform kann der Kühlmediumstrom aus der hydrodynamischen Bremse durch eine eigene Steuervorrichtung in zwei Teilströme aufgeteilt werden, beispielsweise ebenfalls durch ein Thermostat-Regelventil, wobei ein Teilstrom unmittelbar in Richtung des Wärmetauschers geleitet wird, und der andere Teilstrom in Richtung der Steuervorrichtung zur Aufteilung des Kühlmediumstromes aus dem Verbrennungsmotor und in diesem Fall zusätzlich des ihr zugeleiteten Kühlmediumstromes auf den Wärmetauscher und den Bypass um den Wärmetauscher geleitet wird.

Insbesondere kann das zusätzliche Thermostat-Regelventil einen niedrigeren Schaltpunkt als das erste Thermostat-Regelventil aufweisen, welches, insbesondere wenn es am Motor angeordnet ist, beispielsweise allein aufgrund von Wärmeleitung von im Motor erzeugter Wärme bereits geöffnet ist, wenn der Motor Betriebstemperatur aufweist, um sämtliches Kühlmedium aus der hydrodynamischen Bremse unmittelbar dem Wärmetauscher zuzuleiten, wohingegen es zumindest indirekt, beispielsweise im Zusammenspiel mit einem weiteren Thermostat-Regelventil, Kühlmedium aus der hydrodynamischen Bremse am Wärmetauscher vorbei leitet, um durch eine höhere Temperatur des Mediums im Kühlmediumkreislauf den Motor rasch auf Betriebstemperatur zu bringen, solange der Motor diese noch nicht erreicht hat.

Gemäß einer vorteilhaften Ausführungsform ist in dem zu dem Motor parallelen Zweig des Kühlkreislaufes, in welchem die hydrodynamische Bremse angeordnet ist, zusätzlich zu dem Einschalt-Ventil, um die hydrodynamische Bremse im Bremsbetrieb zuzuschalten, ein getrenntes Regelventil angeordnet. Hierdurch können Druckstöße beim Einschalten der hydrodynamischen Bremse durch Zusammenwirken von Einschaltventil und Regelventil vermieden werden. Beispielsweise kann das Regelventil während des Einschaltvorganges gedrosselt oder geschlossen werden, wohingegen es während des Ausschaltvorganges nach einer vorherigen Drosselung geöffnet wird.

Ein in dem zu dem Motor parallelen Zweig des Kühlkreislaufes, in welchem die hydrodynamische Bremse angeordnet ist, zusätzlich zu dem Einschalt-Ventil angeordnetes Regelventil in Strömungsrichtung hinter der hydrodynamischen Bremse kann ferner dazu verwendet werden, das von der hydrodynamischen Bremse gelieferte Bremsmoment zu steuern beziehungsweise zu regeln.

Durch die erfindungsgemäße Lösung wird der Kühlmediumstrom durch die hydrodynamische Bremse optimiert. Die Aufnahmeleistung der Kühlmediumpumpe steigt nur im Bremsbetrieb, das heißt in einem Betriebszustand, in dem ohnehin eine Leistungsaufnahme erwünscht ist, um den Motor abzubremsen, dadurch, dass dieser die Kühlmediumpumpe antreibt.

Ein weiterer Vorteil ist darin zu sehen, dass das im Nichtbremsbetrieb im parallelen Kühlkreislaufzweig mit der hydrodynamischen Bremse stehende Kühlmedium abkühlt und somit eine zusätzliche Kühlwirkung beim Umschalten vom Nichtbremsbetrieb auf den Bremsbetrieb auf den Gesamtkühlkreislauf ausübt.

Insbesondere durch unmittelbares Einleiten des aus der hydrodynamischen Bremse abgeleiteten Kühlmediumstromes in den Wärmetauscher, kann die Verfügbarkeit der hydrodynamischen Bremse dadurch erhöht werden, dass eine höhere Aufheizung des Kühlmediums in der hydrodynamischen Bremse, insbesondere während der Zeitspanne, in welcher der Motor nach einem Kaltstart auf Betriebstemperatur gebracht wird, ermöglicht wird, im Vergleich zu herkömmlichen Ausführungen, bei denen das Kühlmedium aus der hydrodynamischen Bremse auf die Temperatursteuervorrichtung geleitet und somit teilweise am Wärmetauscher vorbei geführt wird, weil die Temperatursteuervorrichtung zur Aufheizung des Motors ein Abkühlen des Kühlmediums vermeiden will.

Das unmittelbare Einleiten des aus der hydrodynamischen Bremse abgeleiteten Kühlmediumstromes in den Wärmetauscher erhöht die Verfügbarkeit der hydrodynamischen Bremse ferner dadurch, dass die Trägheit eines Thermostat-Regelventils, das zur Temperatursteuerung beziehungsweise -regelung des Kühlmediums verwendet wird, auf das aus der hydrodynamischen Bremse abgeleitete Kühlmedium keinen Einfluss hat. Bei einem Zuführen dieses Kühlmediums auf ein entsprechendes Thermostat-Regelventil kann herkömmlich die Trägheit dieses Ventils dazu führen, dass eine Umschaltung des Kühlmediums aus dem Bypass auf den Wärmetauscher nur mit Verzögerung erfolgt, und dadurch ein unerwünschter Anstieg der Temperatur des Kühlmediums eintritt.

Die Erfindung soll nachfolgend anhand von Ausführungsbeispielen und den Figuren näher erläutert werden.

Es zeigen:
- Figur 1: ein erstes Ausführungsbeispiel der Erfindung mit einem Thermostat-Regelventil und der unmittelbaren Zuführung des Kühlmediumstroms aus der hydrodynamischen Bremse in den Wärmetauscher;
- Figur 2: ein Ausführungsbeispiel mit zwei Thermostat-Regelventilen;
- Figur 3: ein Ausführungsbeispiel der Erfindung mit einer abgewandelten Temperaturregelung;
- Figur 4: ein Ausführungsbeispiel gemäß der Figur 3, wobei jedoch das Einschalt-Ventil als Regelventil ausgebildet ist;
- Figur 5: ein Ausführungsbeispiel mit einem Ölretarder;
- Figur 6: die Anordnung eines Drehflügels im Kühlkreislauf an der Verzweigungsstelle, in welcher das Kühlmedium in Richtung des Motors und des Retarders aufgeteilt wird.

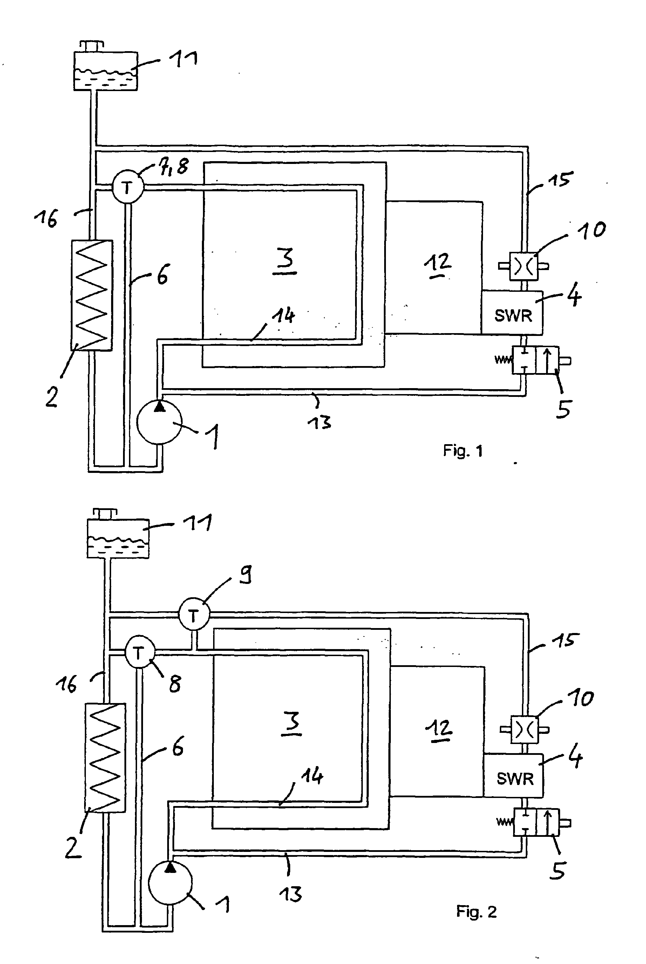

In der Figur 1 erkennt man einen Kühlkreislauf eines Kraftfahrzeugs, wobei in dem Kühlkreislauf eine Kühlmediumpumpe 1 in Strömungsrichtung unmittelbar hinter dem Wärmetauscher 2 und dem Bypass 6 um den Wärmetauscher herum angeordnet ist. Der Kühlmediumstrom wird unmittelbar hinter der Kühlmediumpumpe 1 - im Bremsbetrieb - in zwei Teilströme aufgeteilt, von denen einer durch die Leitung 13 strömt, und der andere durch die Leitung 14. Die Leitung 14 ist durch den Motor 3, welcher als Verbrennungsmotor ausgeführt ist, hindurchgeführt, so dass der Kühlmediumstrom durch die Leitung 14 den Motor 3 abkühlt. Der Motor 3 treibt über ein Getriebe 12 die hydrodynamische Bremse 4 an, welche vorliegend als Sekundärwasserretarder ausgebildet ist, das heißt die hydrodynamische Bremse 4 ist im Kraftfluss des Antriebstrangs des Fahrzeugs getriebeabtriebsseitig angeordnet und verwendet als Arbeitsmedium Wasser beziehungsweise ein Wassergemisch, nämlich das Kühlmedium des Fahrzeugkühlkreislaufs.

Die Leitung 13 führt über ein Einschalt-Ventil 5, das heißt über ein Ventil, welches nur zwei Positionen aufweist, nämlich eine erste Position, in welcher es vollständig geöffnet ist, und eine zweite Position, in welcher es vollständig geschlossen ist, zu der hydrodynamischen Bremse 4, welche somit durch Betätigen des Ventils 5 ein-und ausgeschaltet werden kann, dadurch dass ihr Arbeitsraum gefüllt und entleert wird.

In Strömungsrichtung hinter der hydrodynamischen Bremse 4 ist ein zusätzliches Regelventil 10 angeordnet, um die Strömungsmenge durch den zu dem Motor 3 parallelen Leitungszweig des Kühlkreislaufs, mit dem Einschalt-Ventil 5, der hydrodynamischen Bremse 4 und eben diesem Regelventil 10, zu regeln.

Ausgehend von dem Regelventil 10 wird das Kühlmedium aus der hydrodynamischen Bremse über die Leitung 15 in eine Leitung 16 übergeben, die unmittelbar zu dem Wärmetauscher 2 führt.

Das Kühlmedium durch den Motor 3 in der Leitung 14, das heißt parallel zu der Leitung 15, wird auf ein Thermostat-Regelventil 8 geleitet, welches diesen Kühlmediumstrom in zwei Teilströme aufteilt, von denen ein Teilstrom über die Leitung 16 in den Wärmetauscher 2 strömt, und der andere Teilstrom über die Leitung 6 am Wärmetauscher 2 vorbei zur Pumpe 1 strömt. Das Thermostat-Regelventil bildet somit alleine die Steuervorrichtung 7 zum Aufteilen des Kühlmediumstromes und zur Temperaturregelung im Kühlkreislauf aus.

Um Volumenschwankungen im Kühlkreislauf auszugleichen, ist ein Ausgleichsbehälter 11 auf bekannte Art und Weise vorgesehen.

Wie man aus der Figur 1 klar erkennt, wird beim Einschalten der hydrodynamischen Bremse 4, das heißt beim Übergang vom Nichtbremsbetrieb zum Bremsbetrieb beziehungsweise beim Öffnen des Einschalt-Ventils 5, der wirksame Strömungsquerschnitt gegenüber dem Nichtbremsbetrieb im Kühlkreislauf deutlich erhöht. Während im Nichtbremsbetrieb sämtliches Kühlmedium allein durch die Leitung 14 strömen muss, teilt sich im Bremsbetrieb dieser Kühlmediumstrom auf die Leitungen 13 und 14 auf, welche zusammen einen größeren Strömungsquerschnitt zur Verfügung stellen. Zugleich arbeitet die hydrodynamische Bremse 4, welche über das Getriebe 12 angetrieben wird, als eine Pumpe, so dass sie neben der Querschnittserweiterung im Kühlmittelkreislauf zusätzlich zu einer Verminderung des Gesamtströmungswiderstandes im Kühlkreislauf, welcher durch die Kühlmediumpumpe 1 überwunden werden muss, beiträgt. Dies führt dazu, dass die von der Kühlmediumpumpe 1 geförderte Kühlmediummenge ansteigt, was im Bremsbetrieb erwünscht ist.

Gemäß der Figur 2 ist in der Leitung 15 ein zweites Thermostat-Regelventil 9 vorgesehen, welches den Kühlmediumstrom aus der Leitung 15, das heißt aus der hydrodynamischen Bremse 4, in zwei Teilströme aufteilt. Der erste Teilstrom wird unmittelbar in die Leitung 16 und damit den Wärmetauscher 2 geleitet, während der zweite Teilstrom in die Leitung 14 und zum ersten Thermostat-Regelventil 8 geleitet wird. Im Rahmen der vorliegenden Erfindung umfasst dabei die Aufteilung eines Mediumstromes in zwei Teilströme auch die beiden Extremzustände, in welchem entweder der ankommende Mediumstrom vollständig dem ersten Teilstrom zugeordnet wird oder der ankommende Mediumstrom vollständig dem zweiten Teilstrom zugeordnet wird.

Durch Vorsehen des zweiten Thermostat-Regelventils ist es möglich, zur schnelleren Aufheizung des Motors 3 nach einem Kaltstart den aus der hydrodynamischen Bremse 4 stammenden Kühlmediumstrom, statt ihn unmittelbar auf den Wärmetauscher 2 zu leiten, in Richtung des ersten Thermostat-Regelventils 8 und über dieses an dem Wärmetauscher 2 durch den Bypass 6 vorbeizuleiten.

Das zweite Thermostat-Regelventil 9 kann beispielsweise mit einem extrem niedrigen Schaltpunkt ausgeführt werden und in wärmeleitender Verbindung mit dem Motor 3 angeordnet werden, so dass es nur dann, wenn der Motor 3 seine Betriebstemperatur noch nicht erreicht hat, den Kühlmediumstrom aus der hydrodynamischen Bremse 4 teilweise oder vollständig in Richtung des ersten Thermostat-Regelventils 8 leitet oder allgemein mit dem Kühlmediumstrom aus dem Verbrennungsmotor 3 mischt, wohingegen es, sobald der Motor 3 seine Betriebstemperatur erreicht hat, sämtliches Kühlmedium aus der hydrodynamischen Bremse 4 unmittelbar dem Wärmetauscher 2 derart zuleitet, dass dieses Kühlmedium nicht durch den Bypass 6 um den Wärmetauscher 2 herumgeleitet werden kann.

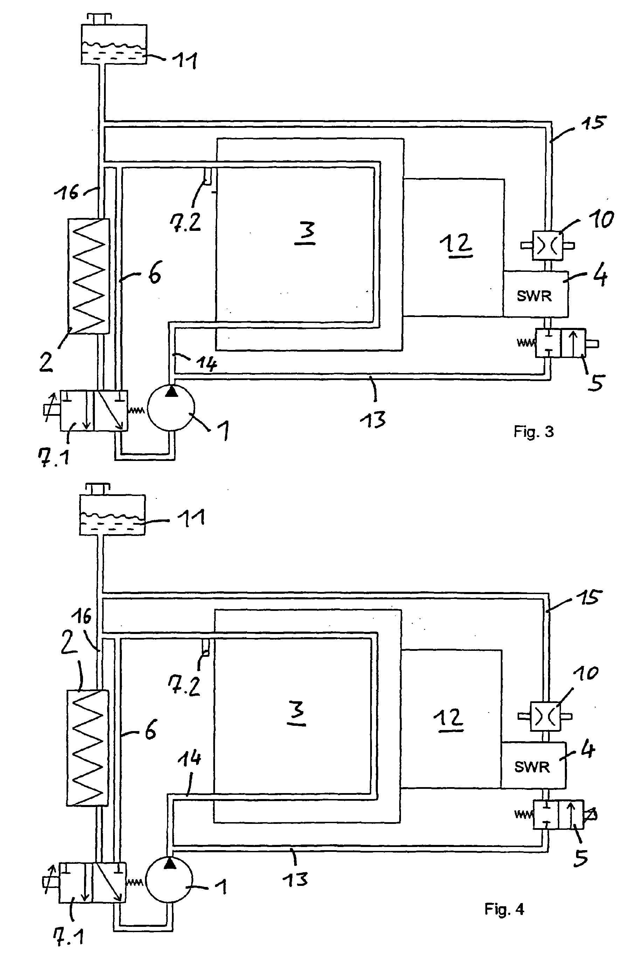

Gemäß den Figuren 3 bis 5 ist die Steuervorrichtung 7 zum Aufteilen des Kühlmediumstroms aus dem Motor 3 in einen Teilstrom in Richtung des Wärmetauschers 2 und einen Teilstrom durch den Bypass 6 am Wärmetauscher 2 vorbei abweichend von den in den Figuren 1 und 2 dargestellten Ausgestaltungen gestaltet. So umfasst die Steuervorrichtung 7 ein Umschaltventil 7.1 in Strömungsrichtung hinter dem Wärmetauscher und ein Thermostat beziehungsweise einen Temperaturaufnehmer 7.2 zum Erfassen der Temperatur des aus dem Motor 3 ausströmenden Kühlmediums. Das Umschaltventil 7.1 unterbricht in einer ersten Stellung den Kühlmediumstrom aus dem Wärmetauscher 2, so dass sämtliches Kühlmedium am Wärmetauscher 2 vorbei durch den Bypass 6 geleitet wird. In seiner zweiten Stellung unterbricht das Umschaltventil 7.1 die Kühlmediumströmung durch den Bypass 6, so dass sämtliches Kühlmedium durch den Wärmetauscher 2 geleitet wird. Das Ventil 7.1 ist vorteilhaft als Regelventil ausgeführt, so dass Zwischenstellungen, insbesondere beliebige Zwischenstellungen, zwischen den beiden genannten Positionen möglich sind, um auch eine Aufteilung des Kühlmediumstromes durch den Wärmetauscher 2 und zugleich durch den Bypass 6 in gewünschten Verhältnissen zu erreichen.

In den Figuren 3 und 4 ist in Strömungsrichtung hinter der hydrodynamischen Bremse 4, wie bei den in den Figuren 1 und 2 gezeigten Ausführungen, ein Regelventil 10 angeordnet.

Gemäß der Figur 4 ist zusätzlich das Ventil 5 in Strömungsrichtung vor der hydrodynamischen Bremse als Einschalt-Regelventil ausgeführt, so dass dieses den Kühlmediumstrom in die hydrodynamische Bremse 4 nicht nur vollständig zulassen oder unterbrechen kann, sondern Zwischenstellungen möglich sind, um diesen Kühlmediumstrom zu drosseln beziehungsweise zu regeln.

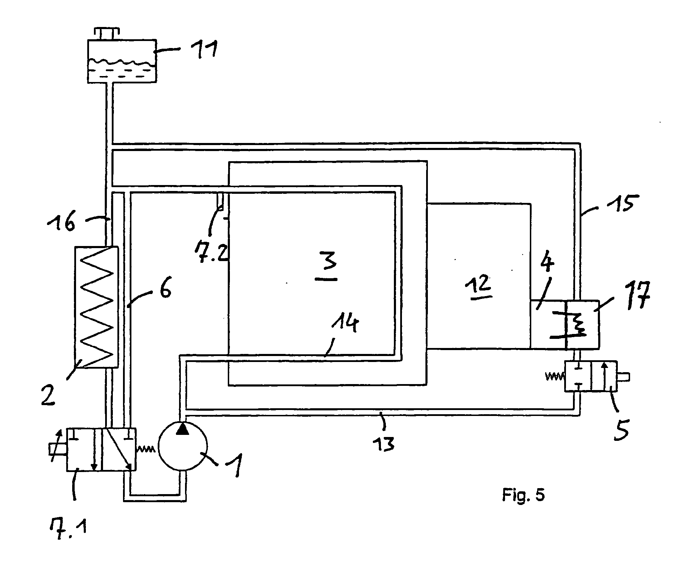

In der Figur 5 ist ferner die alternative Ausgestaltung der Erfindung gezeigt, bei der die hydrodynamische Bremse nicht unmittelbar im Kühlkreislauf, in welchem das Kühlmedium zirkuliert, angeordnet ist. Stattdessen ist anstelle der hydrodynamischen Bremse 4 in den vorhergehenden Ausführungen ein Wärmetauscher 17 angeordnet, dessen Wasserseite durch das Kühlmedium gekühlt wird. Mittels des Wärmetauschers 17, auch als Wärmetauscher der hydrodynamischen Bremse bezeichnet, wird das Arbeitsmedium der hydrodynamischen Bremse 4, welches vorliegend Öl ist, da die hydrodynamische Bremse 4 als Ölretarder ausgeführt ist, gekühlt. Im übrigen können die oben beschriebenen Merkmale der Erfindung jedoch unverändert angewendet werden, da es genauso wie zuvor notwendig ist, die hydrodynamische Bremse 4 im Bremsbetrieb zu kühlen, wobei dies hier abweichend nicht direkt, sondern indirekt über den zusätzlichen Wärmetauscher 17 erreicht wird.

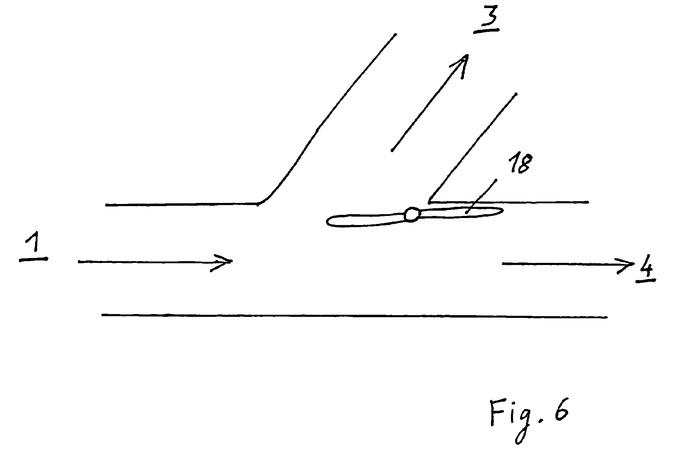

In der Figur 6 ist eine Strömungsquerschnittregelvorrichtung 18 dargestellt, die in der Verzweigungsstelle des Kühlkreislaufes angeordnet ist, in welcher der Kühlmediumstrom aus der Pumpe 1 in zwei Teilströme aufgeteilt wird, von denen ein Teilstrom in Richtung des Motors 3 und der andere Teilstrom in Richtung der hydrodynamischen Bremse 4 beziehungsweise des entsprechenden Wärmetauschers 17 geleitet wird. Die Strömungsquerschnittregelvorrichtung 18, welche lediglich schematisch in Form eines Drehflügels dargestellt ist, öffnet den Strömungsquerschnitt in Richtung des Motors 3, solange der Kühlkreislaufzweig mit der hydrodynamischen Bremse 4 geschlossen ist. Im Bremsbetrieb hingegen beschränkt die Strömungsquerschnittregelvorrichtung 18 den Strömungsquerschnitt in Richtung des Motors 3 um ein gewünschtes Ausmaß und sorgt somit für die optimale Verteilung des Kühlmediums zwischen dem Motor 3 und der hydrodynamischen Bremse 4.

## Patentansprüche

1. Kühlkreislauf, insbesondere Fahrzeugkühlkreislauf,
1.1 mit einer Kühlmediumpumpe (1), die ein Kühlmedium in dem Kühlkreislauf umpumpt;
1.2 mit einem Wärmetauscher (2) zum Abführen von Wärme aus dem Kühlmedium;
1.3 mit einem Motor (3), der durch das Kühlmedium gekühlt wird;
1.4 mit einer hydrodynamischen Bremse (4), deren Arbeitsmedium das Kühlmedium ist oder deren Arbeitsmedium durch das Kühlmedium in einem zusätzlichen Wärmetauscher (17) gekühlt wird;
1.5 mit einem Ventil (5) zum Zuschalten der hydrodynamischen Bremse (4) in den Kühlkreislauf in einem Bremsbetrieb und zum Herausschalten der hydrodynamischen Bremse (4) aus dem Kühlkreislauf in einem Nichtbremsbetrieb;
1.6 die hydrodynamische Bremse (4) oder der zusätzliche Wärmetauscher (17) ist im Kühlkreislauf mit Bezug auf die Kühlmediumsströmung parallel zu dem Motor (3) angeordnet, und
1.7 das Ventil (5) ist als Einschalt-Ventil oder als Einschalt-Regelventil ausgebildet und in Strömungsrichtung des Kühlmediums vor der hydrodynamischen Bremse (4) oder dem zusätzlichen Wärmetauscher (17) und parallel zu dem Motor (3) angeordnet;
**gekennzeichnet durch** die folgenden Merkmale:
1.8 der Kühlkreislauf ist unmittelbar hinter der Kühlmediumpumpe (1) in einen ersten Zweig mit dem Motor (3) und einen zweiten zu dem ersten Zweig parallelen Zweig mit der hydrodynamischen Bremse (4) oder dem zusätzlichen Wärmetauscher (17) aufgeteilt; wobei
1.9 ein Bypass (6) parallel zum Wärmetauscher (2) und eine Steuervorrichtung (7) zum Aufteilen des Kühlmediumstromes vorgesehen sind, um einen Teil des Kühlmediums oder das gesamte Kühlmedium am Wärmetauscher (2) vorbeizuleiten, wobei die Kühlmediumsführung für Kühlmedium aus dem Motor (3) derart mit dem Wärmetauscher (2), dem Bypass (6) und der Steuervorrichtung (7) verschaltet ist, dass das Kühlmedium aus dem Motor (3) mittels der Steuervorrichtung (7) teilweise oder vollständig **durch** den Wärmetauscher (2) hindurch oder an diesem vorbeigeleitet werden kann, wohingegen
1.10 eine Kühlmediumführung für Kühlmedium aus der hydrodynamischen Bremse (4) oder dem zusätzlichen Wärmetauscher (17) derart mit dem Wärmetauscher (2) verschaltet ist, dass das Kühlmedium aus der hydrodynamischen Bremse (4) oder dem zusätzlichen Wärmetauscher (17) stets vollständig **durch** den Wärmetauscher (2) geleitet wird.

2. Kühlkreislauf, insbesondere Fahrzeugkühlkreislauf,
2.1 mit einer Kühlmediumpumpe (1), die ein Kühlmedium in dem Kühlkreislauf umpumpt;
2.2 mit einem Wärmetauscher (2) zum Abführen von Wärme aus dem Kühlmedium;
2.3 mit einem Motor (3), der durch das Kühlmedium gekühlt wird;
2.4 mit einer hydrodynamischen Bremse (4), deren Arbeitsmedium das Kühlmedium ist oder deren Arbeitsmedium durch das Kühlmedium in einem zusätzlichen Wärmetauscher (17) gekühlt wird;
2.5 mit einem Ventil (5) zum Zuschalten der hydrodynamischen Bremse (4) in den Kühlkreislauf in einem Bremsbetrieb und zum Herausschalten der hydrodynamischen Bremse (4) aus dem Kühlkreislauf in einem Nichtbremsbetrieb;
2.6 die hydrodynamische Bremse (4) oder der zusätzliche Wärmetauscher (17) ist im Kühlkreislauf mit Bezug auf die Kühlmediumsströmung parallel zu dem Motor (3) angeordnet, und
2.7 das Ventil (5) ist als Einschalt-Ventil oder als Einschalt-Regelventil ausgebildet und in Strömungsrichtung des Kühlmediums vor der hydrodynamischen Bremse (4) oder dem zusätzlichen Wärmetauscher (17) und parallel zu dem Motor (3) angeordnet;
**dadurch gekennzeichnet, dass**
2.8 ein Bypass (6) parallel zum Wärmetauscher (2) vorgesehen ist, und in Strömungsrichtung des Kühlmediums hinter dem Motor (3) ein erstes Thermostat-Regelventil (8) angeordnet ist, welches in Abhängigkeit der Temperatur des aus dem Motor (3) zugeführten Kühlmediums den Kühlmediumstrom in Richtung des Wärmetauschers (2) und in Richtung des Bypasses (6) aufteilt, und
2.9 in Strömungsrichtung des Kühlmediums hinter der hydrodynamischen Bremse (4) oder dem zusätzlichen Wärmetauscher (17) ein zweites Thermostat-Regelventil (9) angeordnet ist, welches in Abhängigkeit der Temperatur des aus der hydrodynamischen Bremse (4) oder dem zusätzlichen Wärmetauscher (17) zugeführten Kühlmediums den Kühlmediumstrom unmittelbar in Richtung des Wärmetauschers (2) und in Richtung des ersten Thermostat-Regelventils (8) aufteilt.

3. Kühlkreislauf gemäß Anspruch 2, **dadurch gekennzeichnet, dass** der Kühlkreislauf unmittelbar hinter der Kühlmediumpumpe (1) in einen ersten Zweig mit dem Motor (3) und einen zweiten zu dem ersten Zweig parallelen Zweig mit der hydrodynamischen Bremse (4) oder dem zusätzlichen Wärmetauscher (17) aufgeteilt ist.

4. Kühlkreislauf gemäß Anspruch 1, **dadurch gekennzeichnet, dass** in Strömungsrichtung des Kühlmediums hinter dem Motor (3) als Steuervorrichtung (7) ein Thermostat-Regelventil (8) angeordnet ist, welches in Abhängigkeit der Temperatur des aus dem Motor (3) zugeführten Kühlmediums den Kühlmediumstrom in Richtung des Wärmetauschers (2) und in Richtung des Bypasses (6) aufteilt, und ferner **dadurch**, dass das Kühlmedium aus der hydrodynamischen Bremse (4) oder dem zusätzlichen Wärmetauscher (17) an dem Thermostat-Regelventil (8) vorbei in den Wärmetauscher (2) geleitet wird.

5. Kühlkreislauf gemäß einem der Ansprüche 1 bis 4, **dadurch gekennzeichnet, dass** das Ventil (5) als Auf-/Zu-Ventil ausgeführt ist.

6. Kühlkreislauf gemäß einem der Ansprüche 1 bis 5, **dadurch**
**gekennzeichnet, dass** in Strömungsrichtung vor und/oder hinter der hydrodynamischen Bremse (4) oder dem zusätzlichen Wärmetauscher (17) parallel zum Motor (3) ein zusätzliches Regelventil (10) vorgesehen ist.

7. Kühlkreislauf gemäß einem der Ansprüche 1 bis 6, **dadurch**
**gekennzeichnet, dass** der Kühlkreislauf ein Fahrzeugkühlkreislauf ist, der Motor (3) ein Verbrennungsmotor ist, und die hydrodynamische Bremse (4) als Sekundärwasserretarder ausgebildet ist.

8. Kühlkreislauf gemäß einem Ansprüche 1 bis 7, **dadurch gekennzeichnet, dass** der Kühlkreislauf ein Fahrzeugkühlkreislauf ist, der Motor (3) ein Verbrennungsmotor ist, und die hydrodynamische Bremse (4) als Ölretarder ausgebildet ist, dessen Arbeitsmedium Öl in dem zusätzlichen Wärmetauscher (17) durch das Kühlmedium des Fahrzeugkühlkreislaufes gekühlt wird.

## Claims

1. A cooling circuit, especially a vehicle cooling circuit, comprising
1.1 a cooling medium pump (1) which recirculates a cooling medium in the cooling circuit;
1.2 a heat exchanger (2) for dissipating heat from the cooling medium;
1.3 a motor (3) which is cooled by the cooling medium;
1.4 a hydrodynamic brake (4) whose working medium is the cooling medium or whose working medium is cooled by the cooling medium in an additional heat exchanger (17);
1.5 a valve (5) for switching the hydrodynamic brake (4) into the cooling circuit in a braking operation and for switching the hydrodynamic brake (4) out of the cooling circuit in a non-braking operation;
1.6 the hydrodynamic brake (4) or the additional heat exchanger (17) is arranged in the cooling circuit parallel to the motor (3) with respect to the cooling medium flow, and
1.7 the valve (5) is arranged as a switch-on valve or switch-on control valve and is arranged in the direction of flow before the hydrodynamic brake (4) or the additional heat exchanger (17) and parallel to the motor (3); **characterized by** the following features:
1.8 the cooling circuit is divided directly behind the cooling medium pump (1) into a first branch with the motor (3) and a second branch with the hydrodynamic brake (4) or the additional heat exchanger (17), which second branch is parallel to the first branch, with
1.9 a bypass (6) parallel to the heat exchanger (2) being provided and a control apparatus (7) for dividing the cooling medium flow in order to guide a portion of the cooling medium or the entire cooling medium past the heat exchanger (2), with the cooling medium guidance for cooling medium from the motor (3) being switched with the heat exchanger (2), the bypass (6) and the control apparatus (7) in such a way that the cooling medium from the motor (3) can be guided partly or completely through the heat exchanger (2) or past the same by means of the control apparatus (7), whereas
1.10 a cooling medium guidance for cooling medium from the hydrodynamic brake (4) or the additional heat exchanger (17) is switched together with the heat exchanger (2) in such a way that the cooling medium is guided from the hydrodynamic brake (4) or the additional heat exchanger (17) always completely through the heat exchanger (2).

2. A cooling circuit, especially a vehicle cooling circuit, comprising
2.1 a cooling medium pump (1) which recirculates a cooling medium in the cooling circuit;
2.2 a heat exchanger (2) for dissipating heat from the cooling medium;
2.3 a motor (3) which is cooled by the cooling medium;
2.4 a hydrodynamic brake (4) whose working medium is the cooling medium or whose working medium is cooled by the cooling medium in an additional heat exchanger (17);
2.5 a valve (5) for switching the hydrodynamic brake (4) into the cooling circuit in a braking operation and for switching the hydrodynamic brake (4) out of the cooling circuit in a non-braking operation;
2.6 the hydrodynamic brake (4) or the additional heat exchanger (17) is arranged in the cooling circuit parallel to the motor (3) with respect to the cooling medium flow, and
2.7 the valve (5) is arranged as a switch-on valve or switch-on control valve and is arranged in the direction of flow before the hydrodynamic brake (4) or the additional heat exchanger (17) and parallel to the motor (3);
**characterized in that**
2.8 a bypass (6) is provided parallel to the heat exchanger (2), and a first thermostatic control valve (8) is arranged behind the motor (3) in the direction of flow of the cooling medium, which valve divides the cooling medium flow in the direction of the heat exchanger (2) and in the direction of the bypass (6) depending on the temperature of the cooling medium supplied from the motor (3), and
2.9 a second thermostatic control valve (9) is arranged in the direction of flow behind the hydrodynamic brake (4) or the additional heat exchanger (17), which valve divides the cooling medium flow directly in the direction of the heat exchanger (2) and in the direction of the thermostatic control valve (8) depending on the temperature of the cooling medium supplied from the hydrodynamic brake (4) or the additional heat exchanger (17).

3. A cooling circuit according to claim 2, **characterized in that** the cooling circuit is divided directly behind the cooling medium pump (1) into a first branch with the motor (3) and a second branch with the hydrodynamic brake (4) or the additional heat exchanger (17), which second branch is parallel to the first branch.

4. A cooling circuit according to claim 1, **characterized in that** a thermostatic control valve (8) is arranged as a control apparatus (7) in the direction of flow of the cooling medium behind the motor (3), which valve divides the cooling medium flow in the direction of the heat exchanger (2) and in the direction of the bypass (6) depending on the temperature of the cooling medium supplied from the motor (3), and further **in that** the cooling medium is guided from the hydrodynamic brake (4) or the additional heat exchanger (17) past the thermostatic control valve (8) into the heat exchanger (2).

5. A cooling circuit according to one of the claims 1 to 4, **characterized in that** the valve (5) is arranged as an open-close valve.

6. A cooling circuit according to one of the claim 1 to 5, **characterized in that** an additional control valve (10) is provided in the direction of flow before and/or behind the hydrodynamic brake (4) or the additional heat exchanger (17) parallel to the motor (3).

7. A cooling circuit according to one of the claims 1 to 6, **characterized in that** the cooling circuit is a vehicle cooling circuit, the motor (3) is an internal combustion engine, and the hydrodynamic brake (4) is arranged as a secondary water retarder.

8. A cooling circuit according to one of the claims 1 to 7, **characterized in that** the cooling circuit is a vehicle cooling, the motor (3) is an internal combustion engine, and the hydrodynamic brake (4) is arranged as an oil retarder whose working medium of oil is cooled in the additional heat exchanger (17) by the cooling medium of the vehicle cooling circuit.

## Revendications

1. Circuit de refroidissement, en particulier circuit de refroidissement de véhicule,
1.1 avec une pompe à fluide de refroidissement (1) qui pompe un fluide de refroidissement dans le circuit de refroidissement ;
1.2 avec un échangeur de chaleur (2) pour extraire la chaleur du fluide de refroidissement ;
1.3 avec un moteur (3) qui est refroidi par le fluide de refroidissement ;
1.4 avec un frein hydrodynamique (4), dont le fluide de travail est le fluide de refroidissement ou dont le fluide de travail est refroidi par le fluide de refroidissement dans un échangeur de chaleur (17) supplémentaire ;
1.5 avec une vanne (5) pour intégrer le frein hydrodynamique (4) dans le circuit de refroidissement en mode de freinage et exclure le frein hydrodynamique (4) du circuit de refroidissement en mode sans freinage ;
1.6 le frein hydrodynamique (4) ou l'échangeur de chaleur supplémentaire (17) est disposé parallèlement au moteur (3) dans le circuit de refroidissement par rapport à l'écoulement du fluide de refroidissement et
1.7 la vanne (5) est conçue comme une vanne d'activation ou une vanne de régulation d'activation et disposée avant le frein hydrodynamique (4) ou l'échangeur de chaleur supplémentaire (17) dans le sens d'écoulement du fluide de refroidissement et parallèlement au moteur (3) ;
**caractérisé en ce que :**
1.8 le circuit de refroidissement est divisé immédiatement après la pompe à fluide de refroidissement (1) en une première branche avec le moteur (3) et une deuxième branche parallèle de la première avec le frein hydrodynamique (4) ou l'échangeur de chaleur supplémentaire (17) ;
1.9 une dérivation (6) étant prévue parallèlement à l'échangeur de chaleur (2) ainsi qu'un dispositif de régulation (7) pour partager le flux de fluide de refroidissement, pour faire contourner l'échangeur de chaleur (2) par une partie du fluide de refroidissement ou tout le fluide de refroidissement, le guidage du fluide de refroidissement pour le fluide de refroidissement sortant du moteur (3) étant raccordé à l'échangeur de chaleur (2), à la dérivation (6) et au dispositif de régulation (7) de telle manière que le fluide de refroidissement sortant du moteur (3) puisse être entièrement ou partiellement guidé par le dispositif de régulation (7) à travers l'échangeur de chaleur (2) ou contourner celui-ci, alors que
1.10 un guidage du fluide de refroidissement pour le fluide de refroidissement sortant du frein hydrodynamique (4) ou de l'échangeur de chaleur supplémentaire (17) est raccordé à l'échangeur de chaleur (2) de telle manière que le fluide de refroidissement sortant du frein hydrodynamique (4) ou de l'échangeur de chaleur supplémentaire (17) soit toujours entièrement guidé à travers l'échangeur de chaleur (2).

2. Circuit de refroidissement, en particulier circuit de refroidissement de véhicule,
2.1 avec une pompe à fluide de refroidissement (1) qui pompe un fluide de refroidissement dans le circuit de refroidissement ;
2.2 avec un échangeur de chaleur (2) pour extraire la chaleur du fluide de refroidissement ;
2.3 avec un moteur (3) qui est refroidi par le fluide de refroidissement ;
2.4 avec un frein hydrodynamique (4), dont le fluide de travail est le fluide de refroidissement ou dont le fluide de travail est refroidi par le fluide de refroidissement dans un échangeur de chaleur (17) supplémentaire ;
2.5 avec une vanne (5) pour intégrer le frein hydrodynamique (4) dans le circuit de refroidissement en mode de freinage et exclure le frein hydrodynamique (4) du circuit de refroidissement en mode sans freinage ;
2.6 le frein hydrodynamique (4) ou échangeur de chaleur supplémentaire (17) est disposé dans le circuit de refroidissement par rapport à l'écoulement du fluide de refroidissement de façon parallèle au moteur (3) et
2.7 la vanne (5) est conçue comme une vanne d'activation ou une vanne de régulation d'activation et disposée avant le frein hydrodynamique (4) ou l'échangeur de chaleur supplémentaire (17) dans le sens d'écoulement du fluide de refroidissement et parallèlement au moteur (3) ;
**caractérisé en ce que :**
2.8 une dérivation (6) est prévue parallèlement à l'échangeur de chaleur (2) et il est prévu après le moteur (3) dans le sens d'écoulement du fluide de refroidissement une première vanne de régulation thermostatique (8) qui partage, en fonction de la température du fluide de refroidissement extrait du moteur (3), le flux de fluide de refroidissement allant vers l'échangeur de chaleur (2) et vers la dérivation (6), et
2.9 il est prévu après le frein hydrodynamique (4) ou l'échangeur de chaleur supplémentaire (17) dans le sens de l'écoulement du fluide de refroidissement une deuxième vanne de régulation thermostatique (9) qui partage, en fonction de la température du fluide de refroidissement extrait du frein hydrodynamique (4) ou de l'échangeur de chaleur supplémentaire (17), le flux de fluide de refroidissement allant directement vers l'échangeur de chaleur (2) et vers la première vanne de régulation thermostatique (8).

3. Circuit de refroidissement selon la revendication 2, **caractérisé en ce que** le circuit de refroidissement est partagé immédiatement après la pompe à fluide de refroidissement (1) en une première branche avec le moteur (3) et une deuxième branche parallèle à la première avec le frein hydrodynamique (4) ou l'échangeur de chaleur supplémentaire (17).

4. Circuit de refroidissement selon la revendication 1, **caractérisé en ce qu'**il est prévu après le moteur (3) dans le sens de l'écoulement du fluide de refroidissement, pour servir de dispositif de régulation (7), une vanne de régulation thermostatique (8) qui partage, en fonction de la température du fluide de refroidissement extrait du moteur (3), le flux de fluide de refroidissement allant vers l'échangeur de chaleur (2) et vers la dérivation (6), et **en ce que** le fluide de refroidissement sortant du frein hydrodynamique (4) ou de l'échangeur de chaleur supplémentaire (17) est amené à l'échangeur de chaleur (2) en contournant la vanne de régulation thermostatique (8).

5. Circuit de refroidissement selon l'une des revendications 1 à 4, **caractérisé en ce que** la vanne (5) est réalisée comme une vanne d'ouverture et de fermeture.

6. Circuit de refroidissement selon l'une des revendications 1 à 5, **caractérisé en ce qu'**il est prévu avant et/ou après le frein hydrodynamique (4) ou l'échangeur de chaleur supplémentaire (17) dans le sens de l'écoulement, parallèlement au moteur (3), une vanne de régulation supplémentaire (10).

7. Circuit de refroidissement selon l'une des revendications 1 à 6, **caractérisé en ce que** le circuit de refroidissement est un circuit de refroidissement de véhicule, le moteur (3) est un moteur à combustion interne et le frein hydrodynamique (4) est conçu comme un retardateur secondaire à eau.

8. Circuit de refroidissement selon l'une des revendications 1 à 7, **caractérisé en ce que** le circuit de refroidissement est un circuit de refroidissement de véhicule, le moteur (3) est un moteur à combustion interne et le frein hydrodynamique (4) est conçu comme un retardateur à huile, dont l'huile servant de fluide de travail est refroidie dans l'échangeur de chaleur supplémentaire (17) par le fluide de refroidissement du circuit de refroidissement du véhicule.
